# EUROPEAN PATENT APPLICATION

(11) **EP 1 879 392 A2**
(43) Date of publication of application: **16.01.2008**
(21) Application number: 07112224.6
(22) Date of filing: 11.07.2007
(51) Int. Cl.: H04N 7/173

(54) **System and method for dynamically creating online multimedia slideshows**

(30) Priority: 11.07.2006 US 830003 P
(71) Applicant: MAGIX AG, 10117 Berlin (DE)
(72) Inventor: Herberger, Tilman, 01219 Dresden (DE); Tost, Titus, 01219 Dresden (DE)

(57) **Abstract**

According to a preferred aspect of the instant invention, there is provided a system and method that allows an individual to upload any combination of still images, video images, and/or audio files to a central server. Then, the system will automatically and dynamically create a slide show using the materials provided. The images might be shown sequentially or randomly. The user's video files will be incorporated into the show and the audio data will be used to create a background soundtrack when displaying still images. Additionally, the resolution and the data values of specific multimedia files comprising the slide show will be modified dynamically to fit the user's bandwidth, with high resolution images / videos being used if the user has a high speed connection to the central server.

## Description

### FIELD OF THE INVENTION

The present invention relates generally to the field of multimedia data transmission and display and, more generally, to the field of the automatic creation and display of video works such as slide shows across a network connection.

### BACKGROUND OF THE INVENTION

The increasing availability of hardware to create multimedia data has generated a vast amount of user generated digital data, primarily photos, videos and music. Due to differences between the hardware devices which are used to create the multimedia data, the data are typically not stored in a single format., Instead video files are stored in many different formats, thereby making it difficult for a user to utilize this information. Of course, even if two files generally have the same format, different parameter values (e.g., bitrate, resolution, etc.) can complicate combining these items into a single multimedia work. Generally, the differences in format and data values are not a problem for a user who wants to view or listen to the multimedia data at home, such "local" playback of this content is typically not problematic, because usually the user's personal computer can accommodate for playback any standard multimedia data file, if necessary, downloading new codecs, etc. If the user however desires to share those multimedia files with friends, a wide variety of different problems present themselves. Whereas in the past the user had only to deal with still photos and was therewith able to quickly and easily transfer single still photo files from one user to another, today the average user may wish to combine digital still photos with short video clips and, further, to add a soundtrack to create a unified multimedia work, which enhances the multimedia effect of such a presentation beyond the previous somewhat simple examination of still photos by a recipient user. Of course, depending on the source device, the resolution of the image or video files may be wildly different (e.g., the resolution of the video clips might be 640 by 480 pixels, whereas the digital images might feature a resolution of 2272 by 1704 pixels or more. Similarly, two audio works might have different sample rates. Additionally, the files might, as was previously mentioned, also be stored in a plurality of different formats, thereby adding another layer of complexity to an already complex undertaking.

Broadly speaking, the process of creating a combined multimedia work from several different media sources is beyond the ability of most users. Further, and this is especially relevant in the case when the resulting combined work is to be shared over an Internet connection, even if the user is able to create a combined work from the disparate materials, the viewing user may not fully appreciate the work if the bandwidth at which the work is viewed is insufficient to stream it at full resolution and is therewith insufficient to provide the viewing user with a multimedia experience of the best possible quality.

There are a number of different online services that allow a user to present and distribute multimedia material via the Internet. However, these services tend to be somewhat isolated applications. There are photo sharing web services, such as, for example, Flickr™, Picasaweb™ Albums™ and a number of others, video sharing web services, such as, Youtube™, Jumpcut™ and Soapbox™ and music related web services, such as for example, Pandora™ and last.fm™, wherein these later music services do not feature the same functionality level and direction as the above mentioned photo and video sharing services. These photo and video sharing services allow a user to upload and share his or her video and photo creations, quickly and easily and also allow multiple users easy access to a users multimedia creations. With respect to the music services listed previously, an upload of individual user created or user selected music material is not currently possible. Presently, these services only provide the user with a somewhat specific play list based on the music preferences of the user. Apart from these media-file-specific online services, there are other online services that provide the user with the ability to share digital data with other users by allowing the user to store the data on servers of the service provider and providing a recipient with a link to access the shared digital data.

However as previously mentioned, these services are isolated applications that allow the user to share media files of only one specific type (photo or video or audio) or that provide only static file storage and do not offer means for presenting these files. These services are not designed to assist a user in creating online presentations that utilize multiple media files of different types. There are services that allow the user to create and distribute photo slideshows with background music where the slide show might be created from a number of individual digital photo files plus selected background music. However that approach also has problems. For example these presentations are dependent on the creating and technical skills of the user, which means that the user needs to manually create or at least define the content of the presentation. Additionally, these approaches do not consider the bandwidth of the viewing user and the quality of the multimedia presentation. The user, the owner of the digital media making up the presentation, defines the content of the slideshow and the service usually creates the slideshow and reproduces it for a viewing user without any particular consideration of the bandwidth of the viewing user. As a consequence, the viewing user may be, and usually is, plagued with lag (delays in data transfer) and generally with an inferior performance. This can result in a bad experience for the viewing user and potentially deters the user from wanting to create such presentations by him- or herself and from accessing any other of those online presentations.

Accordingly there is no cross-platform solution that allows a user to automatically create, share and view content that is comprised of media items in different source formats in a slideshow format over the Internet and that further considers the bandwidth capabilities of a viewing user when the work is displayed.. Heretofore, a user has been limited to manually creating a slideshow from a number of different source media files in a single output format. However such an approach leaves the problem of the viewing user's bandwidth unaddressed. Additionally the implementation of such a manual approach does not provide an opportunity for the user to specifically address the relationship between Internet performance on the side of the viewing user and the quality of the presentation. Generally the user who creates the presentation creates it on his or her own personal computer using his or her own Internet connection to determine if a selected connection speed is sufficient. Such a determination leads to a subjective creation of the presentation, underscoring the statement that such a manual approach does not address the relationship between Internet performance and the selected quality of the presentation.

Thus, what is needed is a system and method that would allow a user to quickly define digital media of multiple types for automatic combination into a multimedia work. The needed system will provide for viewing of the combined work over a network connection such as the Internet. Finally, the system should address the problem of the relationship between the Internet connection bandwidth of a potential viewing user and the quality of the combined multimedia work, therewith providing a potential viewing user with the best possible quality of the multimedia work.

Heretofore, as is well known in the media editing industry, there has been a need for an invention to address and solve the above-described problems. Accordingly it should now be recognized, as was recognized by the present inventors, that there exists, and has existed for some time, a very real need for a system and method that would address and solve the above-described problems.

Before proceeding to a description of the present invention, however, it should be noted and remembered that the description of the invention which follows, together with the accompanying drawings, should not be construed as limiting the invention to the examples (or preferred embodiments) shown and described. This is so because those skilled in the art to which the invention pertains will be able to devise other forms of the invention within the ambit of the appended claims.

### SUMMARY OF THE INVENTION

There is provided herein a system and method for dynamically creating online multimedia slideshows. The instant invention will allow users to quickly and easily present personal multimedia content in an Internet/web environment. The preferred system is not dependent upon format of each multimedia data file and the resulting multimedia slideshow will preferably be able to accommodate the complete spectrum of multimedia content that might be stored in a users online storage space. The preferred method will integrate the user selected media files into a unified multimedia work depending on the individual type of multimedia content. Additionally, the instant invention will preferably automatically initiate the necessary conversion processes if the media item is not suitable for such an online multimedia slideshow (e.g., if its resolution is too high). The system will preferably be designed to allow users on the "viewing" side to experience the multimedia data created by another user at the best possible quality depending on the viewing user's bandwidth. The system and method is preferably designed for sharing multimedia content in an online environment, it is generally intended to give users an efficient way of being able to quickly present personal data in multimedia form, and additionally it is preferably designed to ensure that the format and other performance parameters of the presentation of the data are automatically selected according to the connection capabilities of a future viewing user.

In brief, the instant invention seeks to ensure that the personal multimedia content that is stored in an online storage service and defined for further presentation will be viewed by an interested user at the best possible quality depending on the bandwidth capabilities of the viewing user. This result is preferably obtained by either testing the Internet connection of the interested user or by gathering appropriate information from the data values that have been stored for that particular user. Note that, although the instant invention will be discussed in terms of an originating user and a viewing user, it is certainly possible that those users might be the same person. The system of the instant invention is not limited to one particular number and is also not limited to "only one type of user access," - e.g., both the user who wants to distribute personal multimedia material as well as the user who wants to view the content may access the system simultaneously.

A multitude of different digital data types can potentially be utilized by the instant invention, so it is possible to combine digital photo files, digital video files and digital music files to a slideshow-type of publication. These digital files do not need to be converted into specific formats by the user and the user does not need to change individual parameter values of specific digital files (e.g., file / image size / resolution, bit depth, frame rate, etc.). Although the instant invention utilizes certain preferred formats for digital media files, the instant invention will preferably accommodate any data format, with data files being automatically converted to a format supported by the instant invention and, depending on the connection speed of the viewing user, the instant invention will automatically change the parameter values of the individual files, which means re-encoding digital video files, changing resolutions etc.

According to a preferred embodiment the instant invention preferably begins with the storage of personal digital multimedia data from a user in the online storage section of the instant invention. The user will preferably first log into the online multimedia system by inserting a user account name and an appropriate password. The user will then be able to select locally stored multimedia data that he or she wants to share over the Internet. The instant invention will then preferably automatically control the upload process of the selected files and will store the digital content in the storage space of that individual user. The storage space might be freely provided to the user with a limited amount of storage space of, for example, about 250 MB, additional upgrades in storage space might be purchased by the user at any time. The multimedia material that the user selected will preferably be inspected by the instant invention and the digital files whose format need to be changed, if they are to be used in a future presentation, will preferably be automatically converted into a supported format by the instant invention. Specific data performance parameters of the selected digital files, such as resolution, bit rate, frame rate, etc. however are not changed by the instant invention at this stage of the process.

In the next preferred step the user will define the particular content that he or she wants to share and which the user wants to be made publicly accessible. The user will preferably be allowed to define content that might only be viewed by a designated type of user, wherein designated type of user stands either for a specific user created list of users, or the specification of individual users with access rights to the personal content. However in the preferred embodiment the selected and uploaded personal content will be stored in the storage space of the individual user and the whole content will automatically be selected and tagged for public access.

The next preferred steps will be initialised by a user who wants to view the content of another user that has been selected for sharing by that user. In a first preferred step, depending on the specific user level of that user the user will log in to the online multimedia storage and presentation system. This is preferably accomplished by entering a login name and a corresponding password, assuming that the user has already registered him- or herself in the storage and presentation system. If that is not the case the user will be able to initiate the registration process, and be prompted for a login name and a password. That being said, it should be noted that the instant invention does not require the viewing user to specifically have an account at the multimedia storage and presentation system. The system will also be preferably designed to allow the user access without an account, however a registered account provides the user with a number of benefits, for example the user might store an information about his or her Internet connection bandwidth in the details of the user account and the instant invention will, provided with that information, be able to more quickly generate a multimedia presentation specifically adapted to the connection speed of the user. In case that the user does not have an user account, the instant invention will preferably determine the connection speed of the viewing user by initiating tests to determine the connection speed of the user. Preferably, this will be carried out by sending the user a plurality of small data packets and monitoring the necessary transfer time and therewith determining the actual connection speed of the user, which will then be stored and used for the creation of a multimedia presentation specific to the Internet connection bandwidth of that user.

In a next preferred step the viewing user will define which of the user's content he or she would like to see in an online multimedia presentation. The instant invention will preferably locate the user whose content is desired and display the content that has been selected for sharing to the viewing user. In a preferred embodiment the instant invention will automatically start the process of displaying the multimedia presentation. The multimedia presentation will preferably be created dynamically, which means that the presentation will be created as soon as the viewing user starts the process and the creation process will additionally be continued during the process of providing the data stream of the multimedia presentation to the user. After activation of the presentation process by the viewing user, the instant invention will preferably parse through the online storage space of the presenting user and display the files random or sequentially. The distinction between a random or a sequential presentation is preferably made by the presenting user, who can select the presentation mode to be fixed (sequentially) or to be random. A fixed sequential presentation mode allows the user to ensure that the stored content is presented in exactly the way he or she wants the data to be presented.

As a next preferred step the instant invention will start with the process of creation and distribution of the multimedia presentation. This step, as was previously mentioned, is a combined process, wherein the instant invention will dynamically create the presentation and simultaneously send out the finished parts of the presentation to the viewing user. The content that is stored is inspected by the instant invention and the parameter values that are associated with the content are stored at running time, these performance parameter values might comprise, for example, resolution, bitrate, file format (e.g., compression type), frame rate, and file size. The parameter values will then be compared with the stored parameters values that describe the connection speed of the viewing user and, based on that comparison, the instant invention will automatically convert the digital multimedia data at run time so that the viewed multimedia files are at the best possible quality that is supported by the viewing user's Internet connection. That conversion will potentially include changing the format of the multimedia files, downsizing the resolution, and changing of the bitrate, etc. - all of which will typically result in a reduction in file size. Preferably, the parameter changes will depend on the Internet connection of the viewing user and will be implemented preferably through the utilization of a comparison map which contains instructions regarding the bitrate and resolution of files of different formats with reference to the properties of the Internet connection. That conversion process will preferably be carried out simultaneously with the transmission of the work to the viewing user. In an alternative embodiment, it is certainly also possible that the multimedia files could be stored in multiple different resolutions, etc., within the multimedia database. In this embodiment, rather than doing the conversion on the fly, instead the converted files are stored at different resolutions, etc., in the multimedia database and can be quickly integrated into the slideshow creation process by the instant invention as needed.

In addition, in another preferred embodiment the instant invention also features a number of options when processing individually formatted multimedia files for integration into a multimedia presentation. For example, digital photo files will optionally be played in a small window or full screen and the stored digital audio files will be played as background music for the digital photos. The selection of a digital audio file as background music will preferably be carried out automatically and randomly. If the next file in the multimedia slideshow is a digital video file, the instant invention will preferably stop the digital audio file and start playing the digital video file. After the playback of the digital video file has ended, the multimedia slideshow will preferably play the next file, either selected random or sequentially, in the list according to its file type. If the next file is a digital photo file, the digital photo file will preferably be displayed and the music is resumed at the same point in time as before the display of the digital video file. The instant invention optionally integrates random transitions between the digital photo files and the digital video files and, additionally, the instant invention preferably integrates and displays subtitles and captions for digital photos and digital video files, wherein these subtitles and captions might be filled with information extracted from the metadata of the files themselves. For example, the date a photo was taken and, perhaps, the location where the photo was taken might be used to annotate that image. These options will preferably be implemented at run time and during the continuous streaming of the multimedia presentation to the viewing user.

Additionally, it should be noted that the instant invention is not limited to any one viewing user hardware configuration, and is capable of providing the same service to a number of different users, simultaneously providing these users an opportunity to store personal data, define sharing rights, access stored media items and configuration parameters, etc.

A main goal of the instant invention is to give the viewing user a seamless multimedia presentation wherein the stored digital multimedia files are streamed at the best quality over the Internet. Other goals include a desire that the quality of the digital photos, digital video files and digital music files be preserved as much as possible, given the relationship between quality, space, bandwidth requirements, etc., and the viewing user's Internet connection speed.

It should be clear that an approach such as this would be a tremendous aid to the user who wants to present his or her personal multimedia material over the Internet in the best possible quality to a number of users each of whom may be viewing the multimedia work at a different connection speed. Additionally, the instant approach would be a tremendous aid for the viewing user, wherein the user is able to quickly and easily view a multimedia presentation which is generated for that specific user and according to his or her connection speed, thereby making sure that the experience of viewing the multimedia presentation is always the best possible one for each viewing user. The system of the instant invention is also broadly directed toward easing storage requirements of multimedia material in an Internet environment. The instant invention allows the user who wants to present his or her multimedia material to avoid much of the effort normally required to create an online multimedia presentation and, in one preferred embodiment, also reduces the amount of storage required to store a number of different versions of the multimedia material so that each user can view the work at the highest quality compatible with his or her Internet connection bandwidth. The instant invention preferably relieves the viewing user from any particular knowledge requirements regarding the use of digital multimedia material in an Internet environment. The instant invention also preferably provides the user with a dynamically generated multimedia presentation in the best possible quality according to the connection speed of that particular viewing user.

The foregoing has outlined in broad terms the more important features of the invention disclosed herein so that the detailed description that follows may be more clearly understood, and so that the contribution of the instant inventors to the art may be better appreciated. The instant invention is not limited in its application to the details of the construction and to the arrangements of the components set forth in the following description or illustrated in the drawings. Rather the invention is capable of other embodiments and of being practiced and carried out in various other ways not specifically enumerated herein. Additionally, the disclosure that follows is intended to apply to all alternatives, modifications and equivalents as may be included within the spirit and the scope of the invention as defined by the appended claims. Further, it should be understood that the phraseology and terminology employed herein are for the purpose of description and should not be regarded as limiting, unless the specification specifically so limits the invention.

### BRIEF DESCRIPTION OF THE DRAWINGS

Other objects and advantages of the invention will become apparent upon reading the following detailed description and upon reference to the drawings in which:

Figure **1** depicts the general working environment of the instant invention.

Figure **2** illustrates the specific participating parties of the instant invention and the relationship between these parties.

Figure **3** contains an illustration of the working environment and the interaction between the participating parties of the instant invention.

Figure **4** describes the preferred structure and layout of the server and of the internal workings of the server.

Figure **5** contains an illustration of a preferred workflow that is set into motion after upload of content and until storage of that content.

Figure **6** describes the workflow that is set into motion at the server after request of a multimedia slideshow.

Figure **7** illustrates the specific steps initiated by the instant invention when determining the connection speed of a user.

Figure **8** depicts the data file processing rules of the instant invention in connection to a determined connection speed value.

Figure **9** illustrates the workflow of the instant invention when uploading multimedia content from the user presenting the content.

Figure **10** illustrates the workflow of the instant invention showing the steps initiated by a user interested in a multimedia slideshow.

### DESCRIPTION OF THE PREFERRED EMBODIMENTS

Referring now to the drawings, wherein like reference numerals indicate the same parts throughout the several views, there is provided a preferred system and method for automatically and dynamically creating multimedia slideshows for viewing remotely in a client-server type arrangement. The system allows for the quick, flexible and easy sharing of personal or arbitrary multimedia content in an online environment, wherein the multimedia content is customized for viewing according to the Internet connection capabilities of a viewing user. The instant invention will preferably enable a user to upload and store his or her content in an online storage facility and furthermore will preferably ensure that the content will be provided to interested users in the best possible quality according to the Internet connection speed of these users.

By way of general explanation and in accord with the preferred embodiment, it is to be understood that when the phrase "dynamically creating online multimedia slideshows" is used herein that usage will preferably be interpreted as providing an online multimedia storage and presentation process for simultaneous use by a plurality of users, wherein the process can be separated into two component parts. One part will preferably allow a user to select and store multimedia material online. The other part will preferably control the dynamic creation of a multimedia slideshow containing selected material and the distribution of that multimedia slideshow to an interested user. By storing personal multimedia material according to the first part of the instant invention, the user will be able to store multimedia content in different formats in an online storage and presentation system wherein the second part of the instant invention ensures that the content will be provided to interested users in the best possible quality according to the connection capabilities of interested users.

For purposes of the instant embodiment it should be understood that the invention preferably seeks to provide a process by which users can store and present personal or arbitrary multimedia material over the Internet without having to specifically take into account possible connection speed issues of users interested in viewing the multimedia material. The instant invention preferably provides the participating users with a graphical user interface guiding the user through the individual steps of the processes, wherein the required number of steps are minimized to only the steps necessary to ensure a quick and easy implementation of the "share and present" principle. To ensure a minimum of required user interactions, a plurality of specific steps will preferably be executed without visible notification to the user. For example, the conversion of uploaded multimedia material to an alternative format will preferably be carried out without a notification to the uploading user. Similarly , when providing a multimedia slideshow to a user, the instant invention will also not provide the interested user with specific information about the current status of the dynamic creation process. Additionally, so that an interested user is provided with the best possible quality according to his or her connection speed, the instant invention will preferably be able to change performance/display parameters of the multimedia material. For example, it might be possible to change the display size of digital video files. The workflows and additional specifications regarding the instant invention will be described in more detail below.

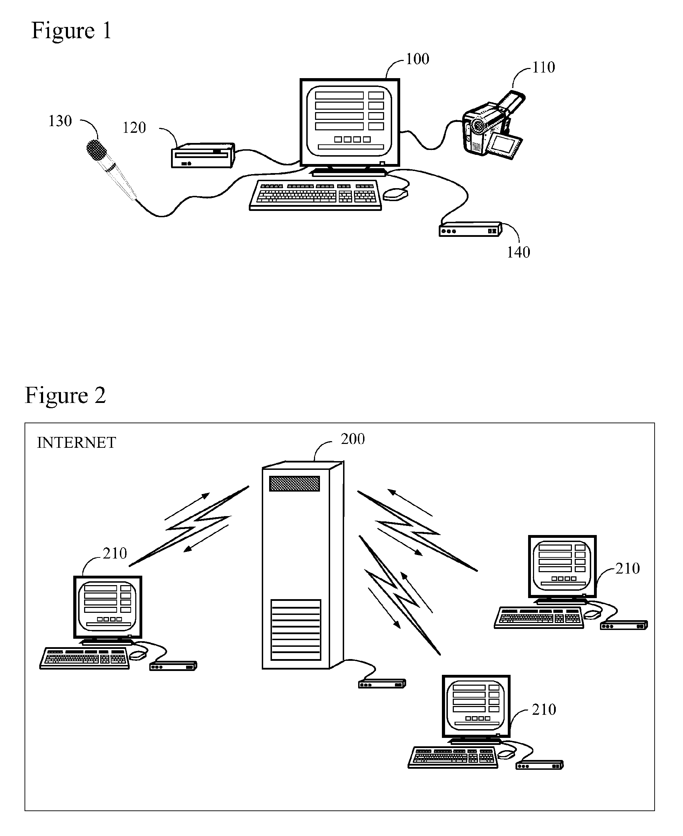

As is generally indicated in Figure **1,** at least a portion of the instant invention will be implemented in form of software running on a users computer **100.** Such a computer will have some amount of program memory and hard disc storage (whether internal or accessible via a network) as is conventionally utilized by such units. Additionally it is possible that an external camera **110** of some sort be utilized with - and will preferably be connectible to the computer so that video and/or graphic information can be transferred to and from the computer. Preferably the camera **110** will be a digital video camera, although that is not a requirement, as it is contemplated that the user might wish to utilize still images from a digital still camera in the creation of his or her multimedia work. Further given the modem trend toward incorporation of cameras into other electronic components (e.g. in handheld computers, telephones, laptops, etc.) those of ordinary skill in the art will recognize that the camera might be integrated into the computer or some other electronic device and, thus, might not be a traditional single-purposes video or still camera. Although the camera will preferably be digital in nature, any sort of camera might be used, provided that the proper interfacing between it and the computer is utilized. Additionally a microphone **130** might be utilized so that the user can add voice-over narration to a specific multimedia work or can control his or her computer via voice-recognition software and additionally a CD or DVD burner **120** could be useful for storing content on writable or rewritable media. Additionally to that an Internet access device **140,** preferably a router, will be connected to the networking card contained in the computer to gain access to the Internet.

Turning next to Figure **2,** this figure illustrates the likely participating parties in an environment according to the instant invention. As is indicated in that figure, a plurality of local desktop computers **210** are connected to the Internet via a number of different access means. For example, users might be connected to the Internet via dial-up, landline broadband (over coaxial cable, fiber optic or copper wires), Wi-Fi, satellite connection, etc. According to Figure , desktop computers can also be connected to a server **200,** which is also connected to the Internet. Thus, the functionality of the instant invention can also be implemented by communicating with the server **200.** It should be noted that the three desktop computers that are illustrated in this figure are only examples of the number of remote desktops and/or laptops that could be simultaneously performing the steps of the instant method. Additionally it should be noted that the illustration and display of three desktop computers in Figure **2** is not meant to limit the instant invention to a "one-computer = one user" model. This illustration is offered to visually suggest a general method of accessing the functionalities of the instant invention. Those of ordinary skill in the art will recognize that it is certainly possible that a number of users will be able to access the server functionalities from a single computer or from a variety of different computers that are connected to the Internet.

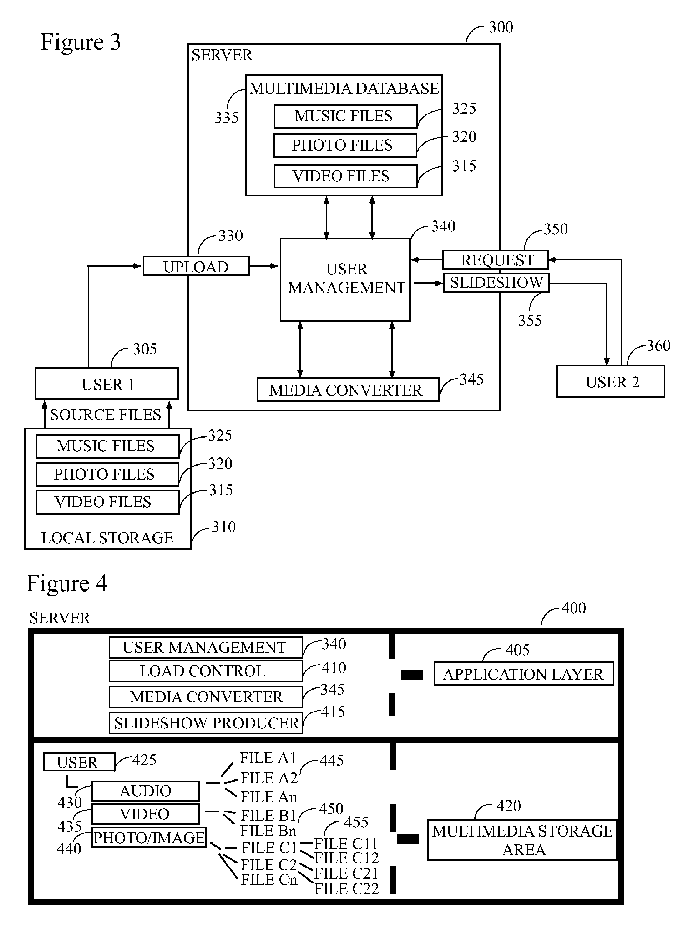

As is generally indicated in Figure **3,** this figure illustrates the general layout of the hardware that is preferably used when implementing the instant invention. Additionally, this figure describes the general workflow that is set into motion when using the instant invention. Only for purposes of efficient illustration, the participating users in this figure have been limited to two users. As was previously mentioned, the instant invention is not directed to a strict user A and user B scenario. Rather, the instant invention is designed to implement the well known multi user access principle of the data distribution via the Internet to a multimedia storage and presentation system.

A server **300** is preferably the center of the instant invention, wherein the server contains a multimedia database **335** in which any number of different multimedia files might be stored. The data files will preferably be comprised of digital music files **325,** digital photo/picture files **320** and/or digital video files **315.** Typically, a number of different applications will be resident on the server, wherein user management **340** is one of these applications. The user management **340** processes the different requests of each connected or connecting user to the server. The functions will be described further in connection with Figure **4.** Of the other applications that will preferably be available on the server, the media converter application is one of the important applications. This application preferably processes the uploaded content from a user. This processing preferably includes the conversion of the uploaded content into different versions of that content. The conversion process and the actions connected therewith depend on the format of the uploaded multimedia material. After successful processing of the uploaded materials, the converted data files will preferably be stored in the multimedia database **335.**

The general workflow of the instant invention will preferably be carried out as follows. User 1 **305** has a number of different multimedia source files available that he or she wants to share over the Internet with other users. These files are preferably stored locally within the storage **310** available in the desktop computer. These files might include music files **325,** photo/image files **320** and video files **315.** Pursuant to this example, User 1 **305** uploads **330** the files that he or she wants to share to the server, wherein before uploading the content the user first preferably authenticates him- or herself by transmitting a user login and password to the user management **340** application running on the server. By using a user account approach the server will be able to assign the uploaded multimedia files to an individual user. The media converter **345** preferably processes the uploaded files and the processed files are stored in the multimedia database **335** of the server. After the completion of the upload and the following processing of the multimedia files. In one preferred embodiment, User 1 **305** will be able to inform others of the availability of the upload work any number of ways, e.g., via email, wherein the email contains an Internet link to the multimedia files or multimedia gallery of User 1 **305.** Alternatively User 2 **360** might search for the multimedia files of User 1 **305** on the server, wherein the multimedia database **335** delivers the results of the search to User 2 **360.** User 2 might request **350** a slideshow of all the stored multimedia files and then the instant invention will preferably provide the user with the multimedia files and will thereafter start the slideshow streaming process **355** from the server to User 2 **360.** It should be noted that the user who is interested in viewing a multimedia slideshow is preferably not limited to only the multimedia data from a single user. The interested user might be able to select and view a number of different multimedia materials as he or she sees fit. Additionally, the multimedia files that will preferably be streamed to the user are selected according to the user's Internet connection speed and or quality, thereby providing the user with a multimedia slideshow in the best quality according to the Internet connection speed of that user.

Turning next to Figure **4,** Figure **4** describes a preferred structure and layout of the server **400.** In other words, Figure **4** illustrates a preferred internalworkings of the server. The server preferably contains application layer **405,** wherein a plurality of different applications are stored in the server. Preferably, these applications will be capable of running continuously on the server to help process the requests of the different users. The application layer preferably contains different applications that manage the inner workings of the server. For example, the user management application **340** that stores the user settings and user accounts and also manages the storage of the different files that each user uploads and desires to share with others. Additionally, a load control application **410** will preferably be running on the server and that application manages the specific distribution of processing power and bandwidth of the server to ensure that each potential connected user receives the same quality of service. Additionally, the server preferably contains a media converter application **345** which is an integral part of the instant invention. The media converter **345** preferably processes each uploaded multimedia file and stores each processed multimedia file in the multimedia database. One application that is of particular importance for the instant invention is the slideshow producer **415,** which preferably automatically selects the appropriate type of multimedia file for streaming to an interested user. In a preferred arrangement, it automatically and dynamically creates the slideshows for requesting users.

Additionally, the server of the instant invention also preferably features a multimedia storage area **420,** in which the instant invention will store the uploaded multimedia files from the users. Note that the server might not necessarily be a single computer, instead the server part of the instant invention could comprise of a plurality of connected computers that make up the server part of the instant invention. Figure **4** additionally illustrates how the different files from potential users will preferably be stored in the multimedia database of the instant invention. Preferably, each user will get a specific account, wherein the account generally contains an account name and an account password. The settings associated with the user account will preferably be handled and stored by the user management application **340,** but the account name is preferably used as a criterion when storing the multimedia files from each user. Additionally, the multimedia files will preferably be differentiated by type. So, for example, the audio files will preferably be stored in a different folder than the photo/video files. Additionally, the different files will preferably be stored either by the name that the uploading user supplied or a name chosen by the instant invention according to an automated naming scheme (e.g., files might be given names such as Al to An).

The files will preferably be stored according to their file formats in designated folders and additionally the instant invention will preferably store different versions of the uploaded files into these folders as well. Each user of the instant invention will preferably get an assigned storage space of a specific size, for example 250 MB. Of course, it is contemplated that the user will preferably be able to purchase more storage space as needed. The storage process, the storage into individual folders and the creation of the different version of a specific file will preferably be executed without any notification of the uploading user. The files that were uploaded by a user **425** of the instant invention will preferably be automatically sorted and stored according to their file format into corresponding folders, folders that will be created automatically by the instant invention when the user creates his or her personal user account. In a preferred arrangement, files that have been recognized as audio files will be stored in a folder for audio files **430,** files that have been recognized as video files will be stored in a folder for video files **435,** and files that have been recognized as photo or image files will be stored in a folder for image files **440, etc.** The recognition of the specific file types will preferably be carried out by an analysis of the file type and the metadata of the file. Additionally, as has been previously mentioned, the files will preferably be stored according to a predetermined naming scheme, wherein the instant invention changes the original file name of the uploading file and stores the files according to a simpler naming convention. For example audio files might be given names such as A1 to An **445,** wherein n should be understood to be replacement for an arbitrary numbering schemes. The naming scheme for the uploaded video files will preferably be the same. In Figure **4** the naming scheme is depicted as B1 **to** Bn **450.** It is certainly also possible that the video files might also be stored using a similar naming scheme as that used for the audio files. The processes connected to the storage of uploaded photo/image files will preferably be more elaborate. In a preferred arrangement, the media converter application **345** creates different versions from an uploaded original file, each of which versions is formed from the original by modifying various of its performance parameters (e.g., bit depth, resolution, frame rate, sample rate, image size, etc.). For example, when the user uploads a digital image file with a resolution of 3500x2084 pixels, the media converter application will create files with resolutions that are different from that of the uploaded / original file, e.g., files with resolutions of 640x480, 800x600, 1024x786, 1280x1024 and 1600x1200 might be created and the instant invention will preferably store these created files according to the previously mentioned naming scheme. Starting from the uploaded file (C1 to Cn) to the created different versions **455** of that uploaded file (e.g., C11 to C1n).

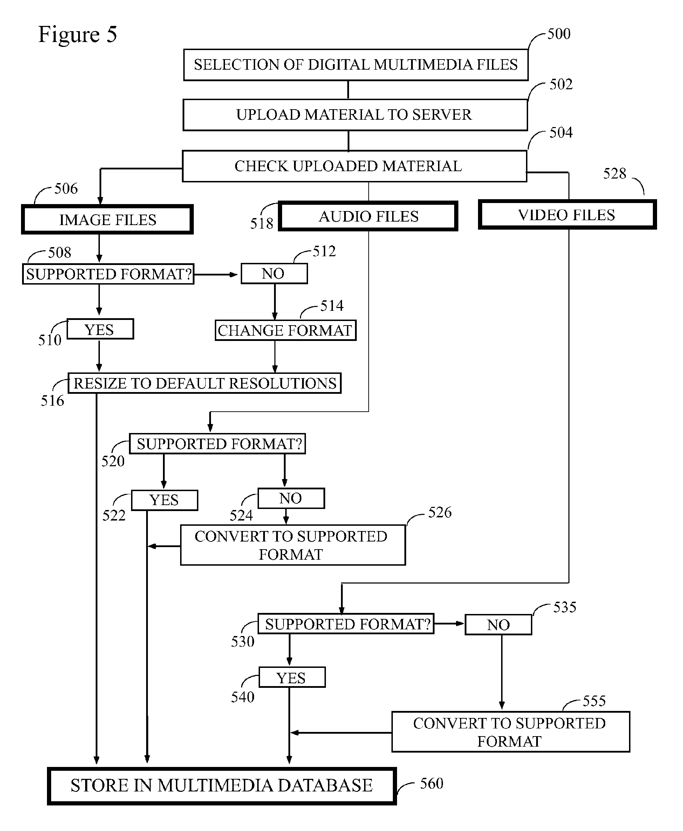

Figure **5** describes a preferred workflow that is initiated when a user elects to upload multimedia files. As a first preferred step, the user will select the digital multimedia **500** files that he or she wants to upload and thereafter share with other users. In a next preferred step, the user will initiate the upload process **502** by signalling to the instant invention that the selection of multimedia files is completed. The next step will preferably be executed after each successful upload of a selected multimedia file or files. That is, the instant invention will preferably check each individual file **504** for integrity, completeness, format, etc. After this initial check, the instant invention will preferably determine the file type of each of the uploaded files. The files will preferably be at least differentiated into image files **506,** audio files **518** and video files **528** and for each file type a preferred process is activated. For example, in a case where an uploaded file is an image file **506,** the instant invention will determine if the format of that file is a supported format **508.** If the determination reveals that the file is supported by the instant invention **510,** the process will preferably proceed to the next step in which the image file will be converted to a plurality of different resolutions **516** and these converted files will preferably then be stored in the multimedia database **560** according to the previously described naming scheme. The conversion process and the results of this process are preferably dependent on the type and format of the source file. If the uploaded image file is not supported by the instant invention **512,** the process will preferably change the format **514** of the uploaded file to a format that is supported by the instant invention and will thereafter proceed in the processing by creating individual versions of the uploaded file.

As was discussed previously, the processing step that is utilized in connection with uploaded audio files **518** is preferably similar to the process associated with image files. The process will preferably determine if the currently uploaded audio file is of a supported format **520** and, if that is the case **522,** the audio file will preferably be stored in the multimedia database **560.** If the format of the audio file is not supported **524,** the process will preferably automatically convert the audio file to a format that is supported by the instant invention **526.** Afterwards, the audio file will preferably be stored in the multimedia database **560.**

Preferably, files that have been determined to be video files **528** will be processed in the same way as files that have been determined as audio files. The format of the video files will be determined **530** and, if that format is supported **540** by the multimedia slideshow producer, the video file will preferably be stored in the multimedia database **560.**

However, in a preferred embodiment the instant invention will automatically convert uploaded video files to a format that is supported by the multimedia slideshow producer **555** and the converted file will be stored in the multimedia database **560** according to the previously described naming scheme.

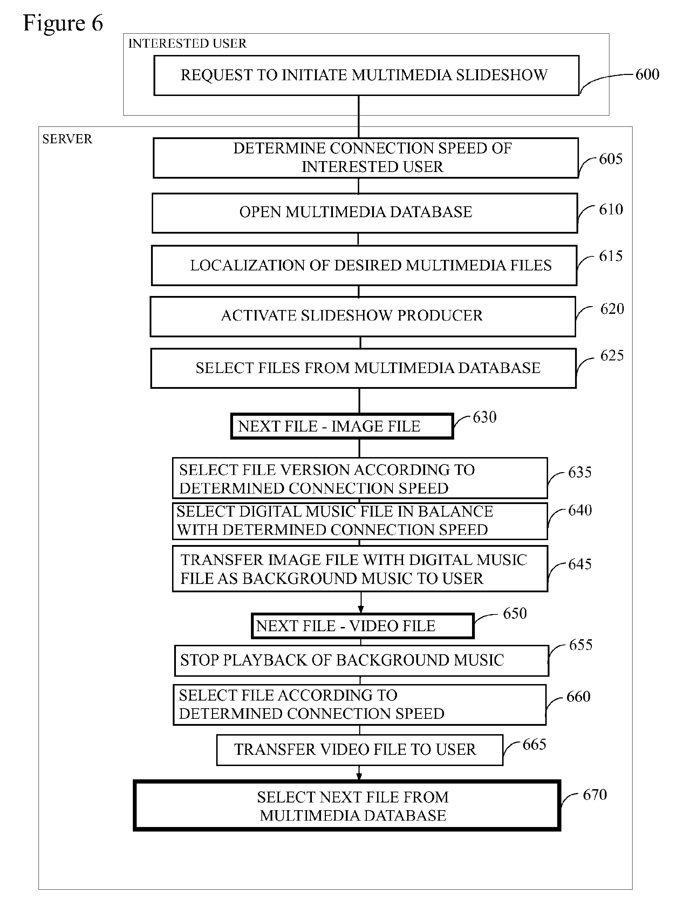

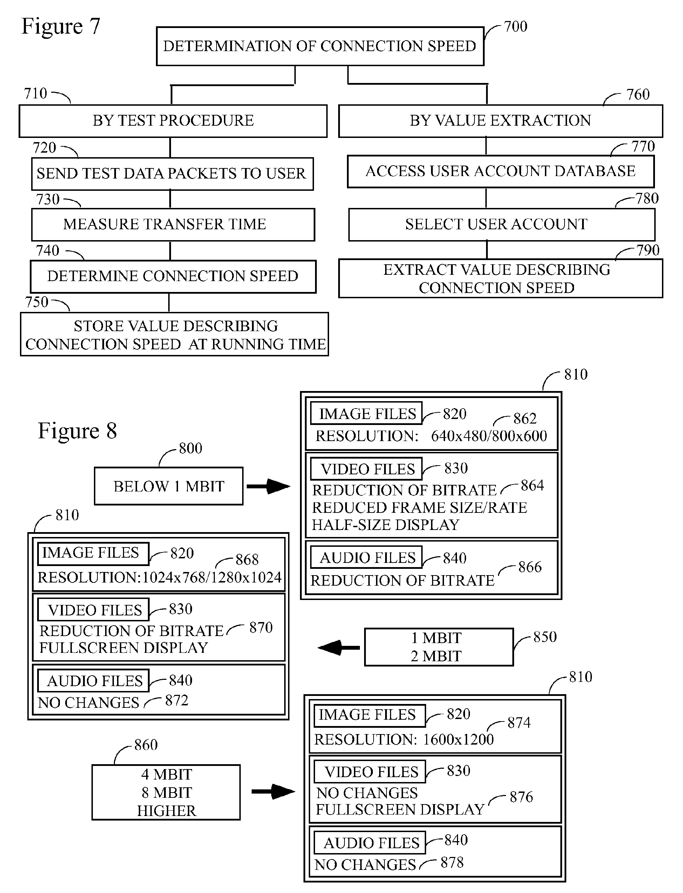

Turning next to Figure **6,** this figure illustrates a preferred workflow that is activated from a user interested in a multimedia slideshow. In a first preferred step, an interested user requests the creation of a multimedia slideshow from the instant invention **600.** The next steps are preferably executed exclusively on the server part of the instant invention, wherein in the next preferred step the connection speed of the interested user is determined **605.** The specific steps connected with the determination of the connection speed will be described further in connection with Figure **7.** After the connection speed of the interested user has been determined, the process will preferably access the multimedia database **610** and, in the next preferred step, localize the desired multimedia files **615,** files that the interested user may have specifically requested when initiating the request of the multimedia slideshow. After the process has determined the location of the desired multimedia files, in a next preferred step the slideshow producer will be activated **620,** wherein the slideshow producer preferably implements the following steps. Next preferably, the files will be selected from the multimedia database **625,** wherein this selection is implemented sequentially, however it is certainly possible that the selection will be implemented in a random fashion. If the next selected file is an image file **630,** the process will preferably select the stored version of the file **635** that is determined to be the best version of the file for the previously determined connection speed of the user. Additionally in the next step the instant invention preferably determines if, according to the determined connection speed, the selected image file might be supplemented with a music file as background music **640.** If the connection speed allows for the provision of the image file and a music file as background music, in the next preferred step the instant invention will transfer the image file and the digital music file to the user **645.** In case that the next file in the list of the defined files is a video file **650** the process preferably will stop the playback of the background music **655** and select the digital video file according to the determined connection speed **660,** which preferably means that the process will transfer the video file to the user **665.** Depending on the determined connection speed, the process will preferably change one or more performance parameter values of the video files (e.g., bit rate, frame rate, image size, compression algorithm, etc.) to ensure best possible quality of the video file for the user. These steps beginning with the selection of the multimedia files will preferably be executed until all of the selected desired multimedia files have been processed.

Turning now to Figure **7,** this figure illustrates the steps that will preferably be executed by the instant invention when determining the connection speed **700** of a user. The determination will preferably be made by the execution of a test procedure which is communicated to the user **710** or with the determination of a value **760.** The test procedure **710** will preferably be implemented via the following steps. In a first preferred step, the process will send data packets of dummy data to the user **720.** In a next preferred step, the process will measure the transfer time of these data packets **730** and by using the results from the measurement of the transfer time and the amount of the dummy data the process will be able to approximately determine the connection speed of the user **740.** The determined value will then preferably be stored while the multimedia slideshow creation process **750** is taking place and will be therewith accessed as needed during the process of the instant invention. The determination of the connection speed by value extraction **760** is quicker and is likely, in some circumstances, to provide a more accurate result than the determination by test procedure. If the user who is interested in a multimedia slideshow is logged into the multimedia storage and presentation system and if the user has an account, the process will preferably access the user account database **770** and by using the login name of the current user the process will select the appropriate user account **780** and will read one or more parameter values that describe the connection speed of that user from that user account, wherein the value that is retrieved was preferably provided or determined by a test procedure at the time of the creation of the user account.

Turning next to Figure **8,** this figure illustrates some differences in processing and distributing the multimedia files during the implementation of the instant invention in connection with a determined connection speed value. The connection speed value and the connected processing and selection rules are preferably divided into three categories. The first category is a connection speed below 1 Mbit **800,** the second category is a connection speed between 1 Mbit and/or 2 Mbit **850,** the third category is the connection speed of 4 Mbit, 8 Mbit or higher **860,** wherein every connection speed value higher than 2 Mbit is preferably assigned to the third category. In the preferred arrangement, different processing rules **810** regarding multimedia files are associated with each category. Further, these rules will preferably be different depending on the format of the multimedia files. For example, there are comparable rules for image files **820,** video files **830** and music files **840.** These processing rules instruct the slideshow production process which versions of the stored files will be integrated into the multimedia slideshow creation process and additionally how some of these files are to be displayed for the interested user. By way of example only, the rules for a connection speed below 1 Mbit could instruct the process to only select image files or versions of image files with a performance parameters / resolution of 640x480 and/or 800x600 **862.** In this scenario, video files are preferably displayed with a reduction in bitrate and/or reduced frame rate or frame size and the video file is preferably only to be displayed with a half-size display size **864.** Similarly, and by way of further example, audio files will preferably be distributed to the user with a reduction in bitrate **866.** The preferred rules for a connection speed between 1 Mbit and 2 Mbit are similar, only image files or the versions of the image files with a resolution of 1024x768 and/or 1280x1024 **868** are to be selected for a positive user experience of the multimedia slideshow. Video files will preferably be distributed to the user with a reduction in bitrate and the video file will be displayed with full screen display size **870.** Audio files will preferably be distributed to the user without change **872,** although other arrangements are certainly possible. Users with a connection speed of 4 Mbit or more will preferably be provided with image files having a resolution of 1600x1200 **874** or more. This may result in the use of unchanged video files which are provided in full screen display mode **876** and unchanged audio files **878.**

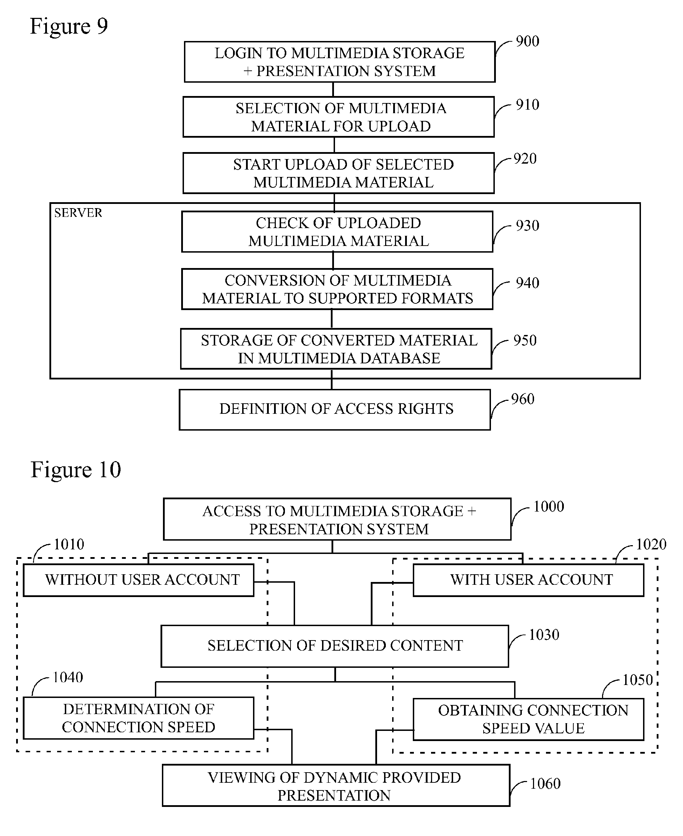

Turning next to Figure **9,** this figure depicts a preferred workflow for a user wanting to present his or her personal multimedia material to others. According to a first preferred step, the user will connect to the instant multimedia storage and presentation system via a browser application from his or her local personal computer and will log in to the storage and presentation system **900.** In the next preferred step, the user will select locally stored personal multimedia material that he or she wants to share over the Internet for upload **910.** The instant invention will then preferably upload the selected multimedia material to the server system providing the storage and presentation system **920** and, in the next preferred step, which is executed on the server system, the uploaded files will be checked **930,** to determine the file type, the file format and other parameter values that describe the file. In the next step, the instant invention will preferably convert the uploaded multimedia material to formats supported by the slideshow producer application and additionally the instant invention will preferably create files with modified parameter values **940.** For example, different resolutions might be created to support the process of constructing a multimedia slideshow according to the connection speed of an interested user. These created and converted files will then preferably be stored in the multimedia database of the instant invention **950.** In the next preferred step, the user might be able to define individual access rights for specific multimedia files **960.**

Turning now to Figure **10,** this figure illustrates a preferred workflow of the instant invention for a user interested in viewing a multimedia slideshow. In a first preferred step, the user will connect to the multimedia storage and presentation system **1000** and in the next step the user will be able to either login to the system without a user account **1010** or with a user account **1020.** In a next preferred step, the user will select the multimedia files or the content that he or she wishes to view in a multimedia slideshow **1030.** However, it is certainly possible that the user who is interested in a multimedia slideshow can opt for a completely random slideshow, without specifying any multimedia files. In a next preferred step, the instant invention will determine the connection speed of the user in order to provide the user with the best possible quality regarding the multimedia slideshow. Depending on the way the user has connected to the system, the instant invention will preferably determine the connection speed / bandwidth. If the user accessed the system without a user account **1010,** the instant invention will preferably determine the connection speed by initiating the previously described determination by test procedure **1040.** If the user accessed the system via a user account **1020,** the instant invention will obtain a connection speed by accessing the previously stored data for that user **1050.** In the next preferred step, the instant invention will begin with the dynamic creation and distribution of the multimedia files to the user and the user will receive and view the presentation **1060.**

### CONCLUSIONS

Of course, many modifications and extensions could be made to the instant invention by those of ordinary skill in the art. For example in one preferred embodiment it would be possible that the instant invention could adapt the creation process of the multimedia slideshow on the fly e.g., if a different user (e.g., a friend) is given access to view the slide show, the instant invention could sense or determine his or her type of connection and reformat the slide show to accommodate that bandwidth. Additionally it might be possible to provide some form of download option, which allows a viewing user to store the created and received multimedia slideshow locally simultaneously or after the slideshow has been distributed to the viewing user.

Thus, the present invention is well adapted to carry out the objects and attain the ends and advantages mentioned above as well as those inherent therein. While the inventive device has been described and illustrated herein by reference to certain preferred embodiments in relation to the drawings attached thereto, various changes and further modifications, apart from those shown or suggested herein, may be made therein by those of ordinary skill in the art, without departing from the spirit of the inventive concept the scope of which is to be determined by the following claims.

## Claims

1. A method of performing a multimedia work over a network connection, comprising the steps of:
(a) obtaining a multimedia work, said multimedia work being **characterized by** at least one performance parameter;
(b) determining for said multimedia work a value of at least one of said at least one performance parameter;
(c) for at least one of said determined parameter value, choosing at least one alternative performance parameter value;
(d) creating at least one modified multimedia work from said multimedia work, said modified multimedia work being **characterized by** at least one of said alternative performance parameter values;
(e) obtaining a request over said network connection from a user to view said multimedia work;
(f) determining a capacity of said network connection with respect to the user;
(g) using said capacity of said network connection to select a work for transmission to the user via said network connection, said work being selected from among said multimedia work and said at least one modified multimedia works;
(h) transmitting said selected work to the user via the network connection;
(i) receiving said transmitted selected work by the user; and,
(j) performing said transmitted work for said user as it is received, thereby allowing the user to experience a performance of said multimedia work over said network connection.

2. A method according to Claim 1, wherein said at least one performance parameters are selected from group consisting of an image resolution, a bit depth, a frame rate, a compression scheme, and, a sample rate.

3. A method according to Claim 1, wherein step (f) comprises the step of:
(f1) determining a connection speed of said network connection with respect to the user.

4. A method according to Claim 1, wherein step (d) comprises the steps of:
(d1) creating at least one modified multimedia work from said multimedia work, said modified multimedia work being **characterized by** at least one of said alternative performance parameter values, and,
(d2) storing said at least one modified multimedia work within a media database,
and wherein step (h) comprises the steps of:
(h1) reading said selected work from said media database, and,
(h2) transmitting said selected work to the user via the network connection.

5. A method according to Claim 1, wherein step (f) comprises the step of:
(f1) determining an identity of the user, and,
(f2) determining a capacity of said network connection with respect to the user by reading a stored capacity value corresponding to said identity of the user from a user database.

6. A method according to Claim 1, wherein step (a) comprises the step of:
(a1) obtaining a multimedia work from a user by uploading said multimedia work via the network connection, said multimedia work being **characterized by** at least one performance parameter.

7. A method of performing a multimedia work over a network connection, comprising the steps of:
(a) uploading said multimedia work from a first user to a server, said multimedia work being **characterized by** at least one performance parameter;
(b) determining a value of at least one of said at least one performance parameters, thereby producing at least one performance parameter value;
(c) selecting a performance parameter value from among said at least one performance parameter values;
(d) selecting at least one alternative performance parameter value different from said selected performance parameter value;
(e) creating at least one modified multimedia work from said multimedia work, each of said modified multimedia works being **characterized by** one of said at least one alternative performance parameter values;
(f) storing said at least one modified multimedia works in a media database;
(g) obtaining a request over a network connection from a second user to view said multimedia work;
(h) determining a capacity of said network connection between said second user and said server;
(i) using at least said capacity of said network connection to select a work for transmission to the second user via said network connection, said work being selected from among said multimedia work and said at least one modified multimedia works;
(j) reading said selected work from said media database;
(k) transmitting said selected work to the second user via the network connection; and,
**(l)** performing said selected work for the second user as it is transmitted, thereby allowing the second user to experience a performance of said multimedia work over said network connection.

8. A method according to Claim **7,** wherein said first user and said second user are a same user.

9. A method according to Claim **7,** wherein said at least one performance parameters are selected from group consisting of an image resolution, a bit depth, a frame rate, a compression scheme, and, a sample rate.

10. A method according to Claim **7,** wherein step (f) comprises the step of:
(f1) determining a connection speed of said network connection with respect to the user.

11. A method according to Claim **7,** wherein step (f) comprises the step of:
(f1) determining an identity of the user, and,
(f2) determining a capacity of said network connection with respect to the user by reading a stored capacity value corresponding to said identity of the user from a user database.

12. A method of performing a multimedia work over a network connection, comprising the steps of:
(a) obtaining a multimedia work;
(b) determining a performance parameter value of said multimedia work;
(c) choosing at least one alternative value different from said determined performance parameter value;
(d) creating at least one modified multimedia work from said multimedia work according to each of said at least one alternative performance parameter values;
(e) receiving a request over a network connection from a user to view said multimedia work;
(f) determining a capacity of said network connection to the user;
(g) selecting a work for transmission to the user from among said multimedia work and said at least one modified multimedia works depending on said capacity of said network connection to the user;
(h) transmitting said selected work to the user via the network connection; and,
(i) performing said selected work for said user in real-time as it is transmitted, thereby allowing the user to experience a performance of said multimedia work over said network connection.

13. A method according to Claim **12,** wherein said at least one performance parameters are selected from group consisting of an image resolution, a bit depth, a frame rate, a compression scheme, and, a sample rate.

14. A method according to Claim **12,** wherein step (f) comprises the step of:
(f1) determining a connection speed of said network connection to the user.

15. A method according to Claim **12,** wherein step (f) comprises the step of:
(f1) determining an identity of the user, and,
(f2) determining a capacity of said network connection with respect to the user by reading a stored capacity value corresponding to said identity of the user from a user database.

16. A method according to Claim **14**, wherein
said connection speed to the user is determined to be less than 1 Mbit per second,
wherein said determined performance parameter is a horizontal and vertical resolution, and
wherein at least one of said modified multimedia works has a horizontal resolution of 640 pixels and a vertical resolution of 480 pixels, and wherein step (g) comprises the step of:
(g1) selecting for transmition to the user one of said at least one modified multimedia works having a horizontal resolution of 640 pixels and a vertical resolution of 480 pixels.
